# EUROPÄISCHE PATENTSCHRIFT

(11) **EP 0 453 721 B1**
(45) Veröffentlichungstag und Bekanntmachung des Hinweises auf die Patenterteilung: **02.03.1994**
(21) Anmeldenummer: 91102144.2
(22) Anmeldetag: 15.02.1991
(51) Int. Cl.: B60L 5/08

(54) **Stromabnehmer**
Current collector
Collecteur de courant

(30) Priorität: 27.04.1990 DE 9004828 U
(43) Veröffentlichungstag der Anmeldung: 30.10.1991
(73) Patentinhaber: WAMPFLER GMBH, D-79574 Weil am Rhein (DE)
(72) Erfinder: Bormann, Uwe, W-7851 Rümmingen (DE)
(74) Vertreter: Charrier, Rolf, Dipl.-Ing.

(56) Entgegenhaltungen:
- DE-A- 3 610 455
- FR-A- 960 054

## Beschreibung

Die Neuerung betrifft einen Stromabnehmer nach dem Oberbegriff des Anspruches 1.

Bei einer bekannten Ausführungsform (siehe Wampfler-Prospekt 811, Jan.82, S.21) eines Stromabnehmers ist ein Basisteil vorgesehen, mit dem der Stromabnehmer an einem Ausleger befestigt wird, der quer zur Stromschiene verläuft. Dieser Ausleger weist einen quadratischen Querschnitt auf. Am Basisteil ist eine Buchse mit einer ebenfalls quadratischen Bohrung vorgesehen. Zwischen der Buchse und dem Basisteil besteht eine begrenzte Verschwenkbarkeit, wobei eine Feder vorgesehen ist, die eine Mittellage des Basisteils relativ zur Buchse und damit relativ zum Ausleger festlegt.

Das Basisteil weist zwei Lageraugen auf, über die mittels eines Bolzens der Arm des Stromabnehmers angelenkt ist. Dieser Bolzen verläuft rechtwinklig zum Ausleger. Der Arm ist relativ zum Basisteil begrenzt verschwenkbar, wobei die Mittellage des Arms durch eine weitere Feder festgelegt ist. Der Arm trägt den Schleifkontaktträger, wobei der Schleifkontaktträger relativ zum Arm begrenzt um eine Achse schwenkbar ist, die parallel zur Achse des Auslegers verläuft. Eine zwischen dem Schleifkontaktträger und dem Arm verlaufende Feder bestimmt die Normallage des Schleifkontaktträgers relativ zum Arm.

Mit dieser Konstruktion ist es möglich, daß der Schleifkontakt mit der Schleifleitung in Kontakt bleibt, auch wenn der Ausleger seitlich zur Stromschiene versetzt und/ oder wenn der Abstand zwischen Ausleger und Stromschiene sich verändert.

Hierbei ist jedoch nachteilig der komplizierte Aufbau im Bereich des Basisteils, wo eine Schwenkbarkeit des Arms in zwei zueinander senkrechten Achsen vorgesehen ist.

Bei einer weiteren bekannten Konstruktion (siehe Wampfler-Prospekt 812, 83.9, S.24) ist das Basisteil starr mit dem Ausleger verbunden. Um unterschiedliche Abstände zwischen Stromschiene und Ausleger auffangen zu können, ist der Arm als Parallelogrammlenker ausgebildet, wobei zwei Lenkerarme durch eine Feder miteinander verbunden sind, die den Schleifkontaktträger in Richtung der Stromschiene drückt. Diese Konstruktion ist ebenfalls aufwendig.

Der Stromabnehmer nach der DE-A-36 10 455 weist eine Konsole auf, die ein Basisteil lagert, da es um eine erste senkrecht zur Stromschiene verlaufende Achse drehbar ist. Dieses Basisteil lagert einen Arm, der um eine zweite Achse schwenkbar ist, die senkrecht zur erste Achse und quer zur Stromschiene verläuft. Am Armende ist ein Lager gelagert, das um eine parallel zur ersten Achse verlaufende Achse drehbar ist und das den Schleifkontaktträger um eine parallel zur zweiten Achse verlaufende Achse kippbar lagert.

Es besteht die Aufgabe, den Stromabnehmer so auszubilden, daß bei einfachem Aufbau eine präzise Ausrichtung des Schleifkontakts zur Stromschiene auch bei relativen Lageänderungen zwischen Schiene und Basisteil gewährleistet ist.

Gelöst wird diese Aufgabe mit den kennzeichnenden Merkmalen des Anspruches 1. Vorteilhafte Ausgestaltungen sind den Unteransprüchen entnehmbar.

Zwei Ausführungsbeispiele werden nachfolgend anhand der Zeichnungen näher erläutert. Es zeigen:
- Figur 1:: eine Seitenansicht der ersten Ausführungsform;
- Figur 2:: eine von der gegenüberliegenden Seite gesehene Seitenansicht dieser ersten Ausführungsform beim Uberfahren der Enden zweier benachbarter Stromschienen und
- Figur 3:: eine teilweise im Schnitt dargestellte Seitenansicht der zweiten Ausführungsform.

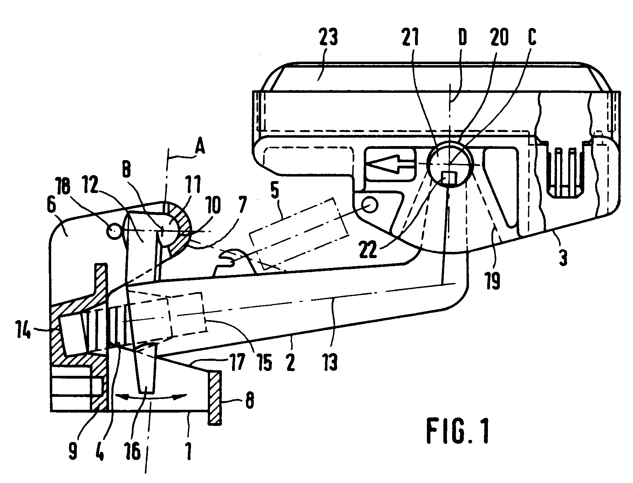

Gemäß Figur 1 weist der Stromabnehmer ein Basisteil 1, einen Arm 2, einen Schleifkontaktträger 3 und zwei Federn 4, 5 auf.

Das Basisteil 1 weist eine schlitzförmige Ausnehmung 6 auf, wobei die die schlitzartige Ausnehmung begrenzenden Wände durch drei Wandungsteile 7, 8, 9 miteinander verbunden sind. Das erste Wandungsteil 7 weist innenseitig eine Kugelkalotte 10 auf. In diese Kugelkalotte 10 greift ein balliger Vorsprung 11, der an einem Ansatz 12 des Arms 2 angeordnet ist, der etwa rechtwinklig zur Längsachse 13 des Arms verläuft. Die als Druckfeder ausgebildete Feder 4 ist jeweils in einer Bohrung 14, 15 am dritten Wandungsteil 9 des Basisteils 1 und des Arms 2 gelagert. In Verlängerung des Ansatzes 12 weist der Arm 2 einen weiteren Ansatz 16 auf, der zur Anlage an das Wandungsteil 8 kommen kann.

In der Ebene der schlitzförmigen Ausnehmung gesehen, weist das Basisteil 1 einen etwa U-förmigen Querschnitt auf. Der Arm 2 verläuft im Bereich des so gebildeten Ausschnitts 17.

In Figur 1 ist der Stromabnehmer in seiner Normallage dargestellt, bei welcher die Druckfeder 4 ein Drehmoment im Gegenuhrzeigersinn auf den Arm 2 ausübt, durch welches der Schleifkontaktträger 3 gegen die nicht dargestellte Stromschiene gepreßt wird. Verändert sich der Abstand zwischen dem Basisteil 1 und der Schleifleitung, dann führt der Arm 2 eine Schwenkbewegung um den Kalottenmittelpunkt aus, wie durch den halbkreisförmigen Doppelpfeil angedeutet. Begrenzt wird diese Verschwenkmöglichkeit, indem der Ansatz 16 entweder zur Anlage an das zweite Wandungsteil 8 oder zur Anlage an das dritte Wandungsteil 9 kommt. Versetzt man Schleifleitung und Basisteil 1 seitlich relativ zueinander, dann kann sich der Arm 2 im Basisteil 1 um eine Achse A drehen. Somit ist eine Verschwenkmöglichkeit des Arms 2 relativ zum Basisteil einmal um die Achse A und zum anderen um die dazu senkrecht verlaufende Achse B gegeben. Die Ansätze 12, 16 weisen natürlich ein Spiel zu den die Ausnehmung 6 begrenzenden Wänden auf.

Im Abstand zur Kalotte 10 weist das Basisteil einen Stift 18 auf, gegen den die kreisbogenförmig gekrümmte Rückseite des Ansatzes 12 zur Anlage kommt.

Anstelle der Druckfeder 4 kann auch eine Zugfeder vorgesehen sein, welche zwischen dem ersten Wandungsteil 7 und etwa der Mitte des Armes 2 verläuft. Alternativ ist es auch möglich, die Kalotte 10 am dritten Wandungsteil 9 anzuordnen, in welche der ballige Vorsprung in Verlängerung des Armes 2 eingreift. In diesem Fall ist dann eine Druckfeder zwischen dem dritten Wandungsteil 9 und dem Ansatz 16 vorzusehen oder alternativ die zuvor beschriebene Zugfeder.

Das gekropfte Ende des Armes 2 greift in einen keilförmigen Schlitz 19 des Schleifkontaktträgers 3 ein, wobei der keilförmige Schlitz 19 in einer quer zu ihm verlaufenden runden Bohrung 20 mündet. Das gekropfte Ende des Armes 2 weist einen kreiszylindrischen Kopf 21 auf, der in die Bohrung 20 eingreift. Dieser Kopf ist an mindestens einer seiner Stirnflächen mit einer vom Zentrum nach außen ansteigenden Keilfläche 22 versehen, die gegen die Wandung der Bohrung 20 zur Anlage kommt und damit den Schleifkontaktträger 3 auf dem Arm 2 sichert.Der Schleifkontaktträger 3 kann somit relativ zum Arm 2 um eine Achse C geschwenkt werden, welche parallel zur Achse B verläuft. Da zwischen der Bohrung 20 und dem Kopf 21 Spiel herrscht, ist es auch möglich, den Schleifkontaktträger 3 um die Achse D begrenzt zu verschwenken, welche rechtwinklig zur Achse C verläuft. Die Normallage des Schleifkontaktträgers 3 relativ zum Arm 2 wird durch die Zugfeder 5 bestimmt, die zwischen Arm 2 und Schleifkontaktträger 3 verläuft und jeweils dort eingehängt ist.

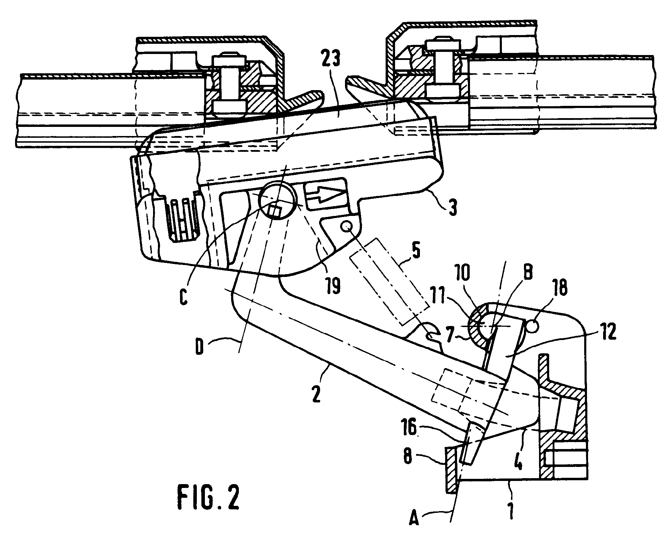

Die Figur 2 zeigt den Übergang des Stromabnehmers zwischen zwei benachbarten Schleifleitungen. Der Abstand des Basisteils 1 zu den Schleifleitungen ist größer als in Figur 1 dargestellt, so daß der Arm 2 von der Feder 4 in Richtung des Wandungsteils 8 verschwenkt ist. Die beiden Schleifleitungen sind höhenmäßig zueinander versetzt, wobei dieser Versatz aufgefangen wird durch die Verschwenkmöglichkeit des Schleifkontaktträgers 3 um die Achse C.

Liegt ein Versatz zwischen dem Basisteil 1 und den Schleifleitungen quer zur Zeichenebene vor, dann wird dieser Versatz ausgeglichen durch die Verschwenkbarkeit des Armes 2 relativ zum Basisteil 1 um die Achse A und die Verschwenkbarkeit des Schleifkontaktträgers 3 relativ zum Arm 2 um die Achse D.

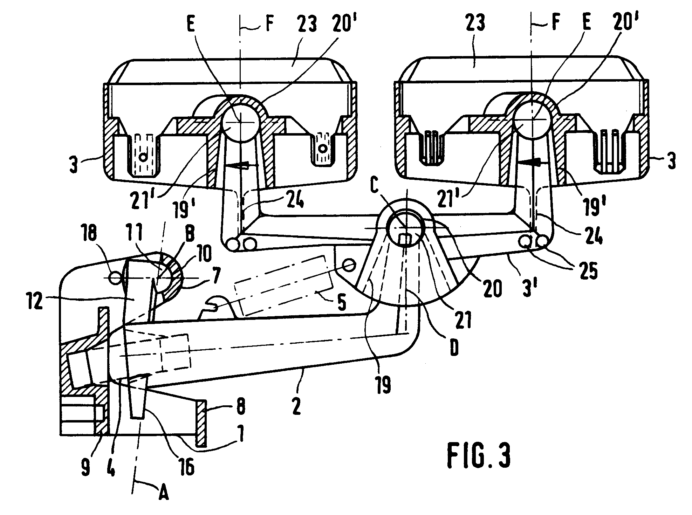

Bei dem Ausführungsbeispiel nach den Figuren 1 und 2 ist der Schleifkontaktträger 3 der Halter eines Schleifkontaktes 23. Bei dem Ausführungsbeispiel nach Figur 3 ist der Schleifkontaktträger 3' U-förmig ausgebildet und trägt an seinen freien Schenkeln je einen Halter 3 für einen Schleifkontakt 23. Die Verbindung zwischen dem Arm 2 und dem Schleifkontaktträger 3' ist die gleiche wie anhand der Figuren 1 und 2 erläutert. Prinzipiell gilt dies auch für die Verbindung zwischen dem Schleifkontaktträger 3' und den Haltern 3 nach Figur 3. Lediglich die keilförmigen Schlitze 19' sind spitzwinkliger als der Schlitz 19. Die Halter 3 sind relativ zum Schleifkontaktträger 3' geringfügig um die zueinander rechtwinklig verlaufenden Achsen E und F verschwenkbar. Um die Neutrallage sicherzustellen, weist jeder Halter 3 beidseits je einen federnden Lappen 24 auf, dessen Enden jeweils zwischen zwei Stiften 25 des Trägers 3' gehalten sind.

## Patentansprüche

1. Stromabnehmer für Schleifleitungen mit einem Basisteil (1), einem daran angelenkten Arm (2), der um eine erste Achse (A) schwenkbar ist, die etwa rechtwinklig zur Längsachse (13) des Arms (1) verläuft, und mit einem Schleifkontaktträger (3), der um eine zweite Achse (C) schwenkbar ist, die etwa rechtwinklig zur ersten Achse (A) und zur Längsachse (13) verläuft, **dadurch** **gekennzeichnet**, daß das Basisteil (1) eine schlitzartige Ausnehmung (6) aufweist, deren Ebene in der von der ersten Achse (A) und der Längsachse (13) gebildeten Ebene verläuft, diese Ausnehmung (6) durch ein erstes Wandungsteil (7) begrenzt wird, das innenseitig eine Kalotte (10) aufweist, am Arm (2) ein balliger, in die Kalotte (10) eingreifender Vorsprung (11) vorgesehen ist, der den Arm (2) in der Ebene der Ausnehmung und um die erste Achse (A) verschwenkbar lagert, und zwischen dem Basisteil (1) und dem Arm (2) eine Feder (4) vorgesehen ist, die im Abstand zum Vorsprung (11) am Arm (2) angreift, Vorsprung (11) und Kalotte (10) miteinander in Eingriff hält und den Arm (2) in Richtung der Schleifleitung schwenkt.

2. Stromabnehmer nach Anspruch 1, dadurch **gekennzeichnet,** daß das Basisteil (1) einen im wesentlichen U-förmigen Querschnitt auf die Ebene seiner Ausnehmung (6) gesehen aufweist und in dem so gebildeten Ausschnitt (17) der Arm (2) um die erste Achse (A) schwenkbar ist.

3. Stromabnehmer nach Anspruch 1 oder 2, dadurch **gekennzeichnet,** daß das erste Wandungsteil (7) die Ausnehmung (6) in Richtung des Arms (2) begrenzt und der Vorsprung (11) an einem etwa rechtwinklig zur Längsachse (13) des Arms (2) verlaufenden ersten Ansatz (12) angeordnet ist, der in Richtung der Schleifleitung weist.

4. Stromabnehmer nach Anspruch 3, dadurch **gekennzeichnet,** daß die Feder (4) eine Druckfeder ist, die jeweils in einer Bohrung (14, 15) von Basisteil (1) und Arm (2) gelagert ist.

5. Stromabnehmer nach Anspruch 3, dadurch **gekennzeichnet,** daß die Feder (4) eine Zugfeder ist, die am ersten Wandungsteil (7) und im Abstand zum Basisteil (1) am Arm (2) eingehängt ist.

6. Stromabnehmer nach einem der Ansprüche 1 bis 5, dadurch **gekennzeichnet,** daß das Basisteil (1) an der Seite des Arms (2), die dem ersten Wandungsteil (7) genüberliegt, ein die Ausnehmung (6) begrenzendes zweites Wandungsteil (8) aufweist und der Arm (2) einen weiteren Ansatz (16) aufweist, der von der Feder (4) gegen das zweite Wandungsteil (8) gedrückt wird.

7. Stromabnehmer nach einem der Ansprüche 1 bis 5, dadurch **gekennzeichnet,** daß das Basisteil (1) im Abstand zur Kalotte (10) einen Steg (18) aufweist und zwischen Kalotte (10) und Steg (18) der erste Ansatz (12) mit Spiel verläuft.

8. Stromabnehmer nach Anspruch 7, dadurch **gekennzeichnet,** daß der erste Ansatz (12) im Bereich des Stegs (18) eine zur Anlage an den Steg (18) kommende Verrundung aufweist.

9. Stromabnehmer nach einem der Ansprüche 1 bis 8, dadurch **gekennzeichnet,** daß der Schleifkontaktträger (3, 3') einen keilförmigen Schlitz (19) aufweist, der in einer runden, quer dazu verlaufenden Bohrung (20) mündet, der gekropfte Arm (2) einen kreiszylindrischen Kopf (21) hat, der in die Bohrung (20) eingreift und der an einer seiner Stirnflächen eine zum Schlitz (19) weisende Keilfläche (22) aufweist, die mit der Bohrungswand verrastet.

10. Stromabnehmer nach Anspruch 9, dadurch **gekennzeichnet,** daß der Schleifkontaktträger (3) der Halter eines Schleifkontaktes (23) ist.

11. Stromabnehmer nach Anspruch 9, dadurch **gekennzeichnet,** daß der Schleifkontaktträger (3') U-förmig ausgebildet ist, der an seinen freien Schenkeln je einen Halter (3) für einen Schleifkontakt (23) trägt.

12. Stromabnehmer nach Anspruch 11, dadurch **gekennzeichnet,** daß jeder Halter (3) einen Schlitz (19') aufweist, der in einer runden Bohrung (20') mündet, und jeder freie Schenkel einen kreiszylindrischen Kopf (21') hat, der in die Bohrung (20') eingreift und der an einer seiner Stirnflächen eine zum Schlitz (19') weisende Keilfläche aufweist, die mit der Bohrungswand verrastet.

13. Stromabnehmer nach Anspruch 12, dadurch **gekennzeichnet,** daß jeder Schlitz (19') breiter ist als der in ihn eingreifende freie Schenkel und jeder Halter (3) mindestens einen parallel zum freien Schenkel verlaufenden federnden Lappen (24) aufweist, dessen Ende zwischen zwei Stiften (25) des Kontaktträgers (3') gehalten wird.

14. Stromabnehmer nach einem der Ansprüche 9 bis 13, dadurch **gekennzeichnet,** daß die Bohrungen (20, 20') jeweils einen größeren Durchmesser aufweisen als der Durchmesser des Kopfes (21, 21').

## Claims

1. A current collector for collector lines, having a base part (1), an arm (2) which is hinged to the latter and able to pivot about a first axis (A) which runs nearly at right angles to the longitudinal axis (13) of the arm (1), and a wiper contact carrier (3) which is able to pivot about a second axis (C) which runs nearly at right angles to the first axis (A) and to the longitudinal axis (13), characterized in that the base part (1) exhibits a recess (6) like a slot the plane of which runs in the plane formed by the first axis (A) and the longitudinal axis (13), this recess (6) is bounded by a first portion (7) of wall which exhibits inside it a cup (10), a crowned projection (11) engaging in the cup (10) is provided on the arm (2) and supports the arm (2) to be able to swivel in the plane of the recess and about the first axis (A), and between the base part (1) and the arm (2) a spring (4) is provided which engages with the arm (2) at a distance from the projection (11) and holds the projection (11) and cup (10) in engagement with one another and pivots the arm (2) in the direction of the collector line.

2. A current collector as in Claim 1, **characterized** in that looking at the plane of its recess (6) the base part (1) exhibits an essentially U-shaped cross-section and in the cut-out (17) so formed the arm (2) is able to pivot about the first axis (A).

3. A current collector as in Claim 1 or 2, **characterized** in that the first portion (7) of wall bounds the recess (6) in the direction of the arm (2) and the projection (11) is arranged on an extension (12) which runs nearly at right angles to the longitudinal axis (13) of the arm (2) and points in the direction of the collector line.

4. A current collector as in Claim 3, **characterized** in that the spring (4) is a compression spring which is supported by the base part (1) and arm (2) in a bore (14, 15) in each.

5. A current collector as in Claim 3, **characterized** in that the spring (4) is a tension spring which is attached to the first portion (7) of wall and to the arm (2) at a distance from the base part (1).

6. A current collector as in one of the Claims 1 to 5, **characterized** in that at the side of the arm (2) which lies opposite the first portion (7) of wall the base part (1) exhibits a second portion (8) of wall bounding the recess (6) and the arm (2) exhibits a further extension (16) which is forced by the spring (4) towards the second portion (8) of wall.

7. A current collector as in one of the Claims 1 to 5, **characterized** in that at a distance from the cup (10) the base part (1) exhibts a crosspiece (18) and the first extension (12) runs with play between the cup (10) and the crosspiece (18).

8. A current collector as in Claim 7, **characterized** in that in the region of the crosspiece (18) the first extension (12) exhibits a rounding which comes into contact with the crosspiece (18).

9. A current collector as in one of the Claims 1 to 8, **characterized** in that the wiper contact carrier (3, 3') exhibits a slot (19) which is shaped like a wedge and opens into a round bore (20) running transversely to it, and the cranked arm (2) has a regular cylindrical head (21) which engages in the bore (20) and exhibits at one of its endfaces a wedge area (22) which points at the slot (19) and snaps into the wall of the bore.

10. A current collector as in Claim 9, **characterized** in that the wiper contact carrier (3) is the holder of a wiper contact (23).

11. A current collector as in Claim 9, **characterized** in that the wiper contact carrier (3') is made in the shape of a U which carries on each of its free arms a holder (3) for a wiper contact (23).

12. A current collector as in Claim 11, **characterized** in that each holder (3) exhibits a slot (19') which opens into a round bore (20'), and each free arm has a regular cylindrical head (21') which engages in the bore (20') and exhibits at one of its endfaces a wedge area (22) which points at the slot (19') and snaps into the wall of the bore.

13. A current collector as in Claim 12, **characterized** in that each slot (19') is wider than the free arm which engages in it and each holder (3) exhibits, running in parallel with the free arm, at least one springy lobe (24) the end of which is held between two pins (25) on the contact carrier (3').

14. A current collector as in one of the Claims 9 to 13, **characterized** in that the bores (20, 20') exhibit in each case a diameter larger than the diameter of the head (21, 21').

## Revendications

1. Trolley pour lignes de contact comportant un élément de base (1), un bras (2) articulé sur celui-ci lequel est pivotable autour d'un premier axe (A) et qui s'étend sensiblement perpendiculairement à l'axe longitudinal (13) dudit bras (2) et comportant un support (3) de contacts frotteurs lequel est pivotable autour d'un deuxième axe (C) qui s'étend sensiblement perpendiculairement au premier axe (A) et à l'axe longitudinal (13), caractérisé en ce que l'élément de base (1) présente un évidement (6) du type fente dont le plan s'étend dans celui formé par le premier axe (A) et l'axe longitudinal (13), ledit évidement (6) étant délimité par un premier élément de paroi (7) qui présente du côté intérieur une calote (10), en ce que sur le bras (2) est prévue une saillie (11) de forme convexe s'insérant dans la calote (10) et qui supporte le bras (2) dans le plan de l'évidement et de manière à le rendre pivotable autour du premier axe (A), et en ce qu'entre l'élément de base (1) et le bras (2) est prévu un ressort (4) qui agit sur le bras (2) à une certaine distance de la saillie (11), maintient en prise ladite projection (11) et la calote (10) et fait basculer le bras (2) en direction de la ligne de contact.

2. Trolley selon la revendication 1, caractérisé en ce que l'élément de base (1) présente une section transversale sensiblement en forme de U vue dans le plan de son évidement (6) et que le bras (2) est pivotable autour du premier axe (A) dans la découpe (17) ainsi formée.

3. Trolley selon la revendication 1 ou 2, caractérisé en ce que le premier élément de paroi (7) délimite l'évidement (6) en direction du bras (2) et que la saillie (11) est disposée sur un premier talon (12) s'étendant sensiblement à angle droit de l'axe longitudinal (13) au bras (2), talon (12) qui est orienté en direction de la ligne de contact.

4. Trolley selon la revendication 3, caractérisé en ce que le ressort (4) est un ressort de compression qui est logé dans respectivement un perçage (14, 15) de l'élément de base (1) et du bras (2).

5. Trolley selon la revendication 3, caractérisé en ce que le ressort (4) est un ressort de traction qui est accroché sur le bras (2) sur le premier élément de paroi (7) à une certaine distance de l'élément de base (1).

6. Trolley selon l'une des revendications 1 à 5, caractérisé en ce que l'élément de base (1) présente, sur le côté du bras (2) faisant face au premier élément de paroi (7), un deuxième élément de paroi (8) délimitant l'évidement (6) et que le bras (2) présente un autre talon (16) qui est comprimé par le ressort (4) contre le deuxième élément de paroi (8).

7. Trolley selon l'une des revendications 1 à 5, caractérisé en ce que l'élément de base (1) présente à une certaine distance de la calote (10) une barrette (18) et que le premier talon (12) s'étend avec un certain jeu entre ladite calote (10) et ladite barrette (18).

8. Trolley selon la revendication 7, caractérisé en ce que le premier talon (12) présente, au voisinage de la barrette (18), un arrondi venant s'appliquer sur ladite barrette (18).

9. Trolley selon l'une des revendications 1 à 8, caractérisé en ce que le support des contacts frotteurs (3, 3') présente une fente angulaire (19) qui débouche dans un perçage rond (20) s'étendant transversalement à ladite fente (19), en ce que le bras coudé (2) a une tête cylindrique (21) qui pénètre dans le perçage (20) et qui présente, sur l'une de ses faces frontales, une face à clavette (22) orientée vers la fente (19), clavette qui s'encastre dans la paroi dudit perçage (20).

10. Trolley selon la revendication 9, caractérisé en ce que le support (3) des contacts frotteurs constitue le dispositif de maintien d'un contact frotteur (23).

11. Trolley selon la revendication 9, caractérisé en ce que le support (3') des contacts frotteurs est réalisé en forme de U, lequel supporte sur chacun de ses bras libres un dispositif de maintien (3) pour un contact frotteur (23).

12. Trolley selon la revendication 11, -caractérisé en ce que chaque dispositif de maintien (3) présente une fente (19') qui débouche dans un perçage rond (20') et que chaque bras libre a une tête cylindrique (21') qui pénètre dans le perçage (20') et qui présente sur l'une de ses faces frontales une face de clavette orientée vers la fente (19') et s'encastre dans la paroi du perçage.

13. Trolley selon la revendication 12, caractérisé en ce que chaque fente (19') est plus large que le bras libre qui y pénètre et que chaque dispositif de maintien (3) présente au moins une patte élastique (24) s'étendant parallèlement audit bras libre et dont l'extrémité est maintenue entre deux goupilles (25) du support de contact (3').

14. Trolley selon l'une des revendications 9 à 13, caractérisé en ce que les perçages (20, 20') ont chacun un diamètre supérieur à celui de la tête (21, 21').
